# EUROPEAN PATENT SPECIFICATION

(11) **EP 2 503 827 B1**
(45) Date of publication and mention of the grant of the patent: **17.06.2015**
(21) Application number: 11817689.0
(22) Date of filing: 20.04.2011
(51) Int. Cl.: H04W 8/26, H04W 24/02, H04W 48/20, H04W 88/12, H04W 88/06, H04W 88/08

(54) **Method and device for selecting access point name**
Verfahren und Vorrichtung zur Auswahl des Zugangspunktnamens
Procédé et dispositif permettant de sélectionner un nom de point d'accès

(30) Priority: 17.08.2010 CN 201010259054
(43) Date of publication of application: 26.09.2012
(73) Proprietor: ZTE Corporation, Shenzhen, Guangdong 518057 (CN)
(72) Inventor: LIU, Xueqin, Shenzhen Guangdong 518057 (CN)
(74) Representative: Virdee-Crofts, Kulwinder Kaur
(86) International application number: PCT/CN2011/073068
(87) International publication number: WO 2012/022161

(56) References cited:
- WO-A1-2007/080512
- WO-A1-2009/150003
- CN-A- 101 404 827
- CN-A- 101 730 184
- CN-A- 101 909 326
- US-A1- 2006 116 507
- US-A1- 2008 285 492
- "3rd Generation Partnership Project; Technical Specification Group Services and System Aspects; Multi access PDN connectivity and IP flow mobility (Release 9)", 3GPP STANDARD; 3GPP TR 23.861, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.3.0, 10 February 2010 (2010-02-10), pages 1-49, XP050401889, [retrieved on 2010-02-10]
- "Scorecard ServiceAccessPoint determination engine", IP.COM JOURNAL, IP.COM INC., WEST HENRIETTA, NY, US, 19 May 2009 (2009-05-19), pages 1-3, XP013131875, ISSN: 1533-0001

## Description

### Technical Field

The present invention relates to the field of wireless communication technology, and in particular, to a method and an apparatus for selecting an access point.

### Background of the Related Art

In the electronic market of which the competition is fierce day by day, in order to improve the user experience, the network application is integrated in a multimode terminal to meet the network demand of the user similarly on the PC machine. Facts prove that this kind of electronic devices integrated with a large number of network applications have a favorable reception unanimously by the users, and have already been considered as the selection of the advanced electron consumption and the high and top grade configuration.

What deserves to be mentioned is that, in the open source robot operating system (Android OS) system supported by the Open Handset Alliance (OHA), there is support for the Internet application itself. Android is an open source mobile phone operating system based on the Linux platform and developed by Google. Android includes the operating system, the user interface and the application program, and Android platform integrates a large number of applications which require a large number of data services to support, such as, Email, electronic market and Youtub (an online video application), etc. The current Android mostly integrates the currently popular Internet applications, such as, micro blog and facebook (one social contact application website) terminal application, etc.

However, the Android platform supports the access point (Access Point Name, APN) limitedly, and only supports single APN. It does not support the CMNET when using the CMWAP, and the CMWAP and the CMNET are two access ways of the General Packet Radio Service (GPRS). In real application, the Multimedia Messaging Service (MMS) and the WAP website mostly use the CMWAP to link the data service, while more applications for visiting the Internet rapidly need to use the CMNET. And the support of single APN reduces the user experience greatly. If the application needing different APN to access the data service is used, then it needs to switch over the APN configuration manually. In the multimode terminal, the multi-network system and the multi-APN bring the inconvenience especially to the use.

"3rd Generation Partnership Project; Technical Specification Group Services and System Aspects; Multi access PDN connectivityand IP flow mobility (Release 9)" 3GPP TR.23.861 (2010-02-10) XP05041889 disloses that devices with mutiple interfaces (e.g.3GPP, WiFi, WiMAX,etc.) are becoming commonly available and the set of applications running in the mobile devices is diversifying with some applications suited to run over 3GPP access systems and other applications well suited to run over some other complementary access systems.

"Scorecard Service Access Point determination engine" EP.COM JOURNAL (2009-05-19) XP013131875 describes a concept that determines which Access Point types can process a certain Application Request based on it's general services requirements, additional to the usual criteria (availability, performance and connectivity criteria).

WO2007/080512 A1 discloses apparatus, methods and computer program products for using access point availability information in a wireless communications system. In aspects of the method performed at an access point in a wireless communications system, the access point generates a message indicating the level of availability of the access point; and transmits the message. In aspects of the method performed at user equipment in a wireless communications system, the user equipment receives messages from access points in the wireless communications system, the messages containing access point availability information indicating the respective levels of availability of the access points available for selection by the user equipment; and selects an access point in dependence on the access point availability information.

### Content of the Invention

The technical problem that the present invention will solve is to provide a method according to claim 1 and an apparatus according to claim 6 for selecting an access point name, to realize the self-adaption selection of the APN in the mobile terminal.

To sum up, the present invention selects different access points for the application for connecting, to realize managing the selection of multiple APNs in the multimode terminal by using the data service, and to reach and meet the objectives, such as optimally using of the user in the data service application in the Android mobile phone, improving the performance of the data·service, reasonably distributing the data service use flow and reducing the data service expenses of the user, thus further improving the user experience, which can meet the customized requirement of the operator, and also can increase the data service performance of the dual-mode terminal and distribute the data service use flow of the dual-mode terminal reasonably.

### Brief Description of Drawings

FIG. 1 is a flow chart of a whole flow of a method for selecting an access point of the present embodiment;
FIG. 2 is a flow chart of realizing self-adaption of multi-APN in a selection method of the present embodiment;
FIG. 3 is a flow chart of realizing selecting user-configuration of multi-APN of the present embodiment;
FIG. 4 is a flow chart of an application example of a method for selecting an access point of the present embodiment;
FIG. 5 is a architecture diagram of an apparatus for selecting an access point of the present embodiment.

### Preferred Embodiments of the Present Invention

In order to meet the user requirement, and to meet the support that different applications and different networks to multiple APNs at the same time, especially in the multimode terminal, the support to the multi-APN is more urgent, and to further improve the user experience, the present embodiment provides a method for selecting the multi-APN, which can meet the requirement customized by the operator, and improve the data service performance of the multimode terminal, assign the data service use flow of the multimode terminal reasonably, and help to reduce the user data service expenses.

The method for selecting the multi-APN in the multimode terminal provided by the present embodiment mainly includes:
1, the whole realization procedure of the method for selecting the multi-APN in the multimode terminal;
2, the self-adapting realization procedure of the multi-APN;
3, the realization procedure of the user setting the selection policy of the multi-APN;
4, the realization design of the multimode multi-APN selection database;
5, the design of the APN screening policy in the multimode multi-APN selection database.

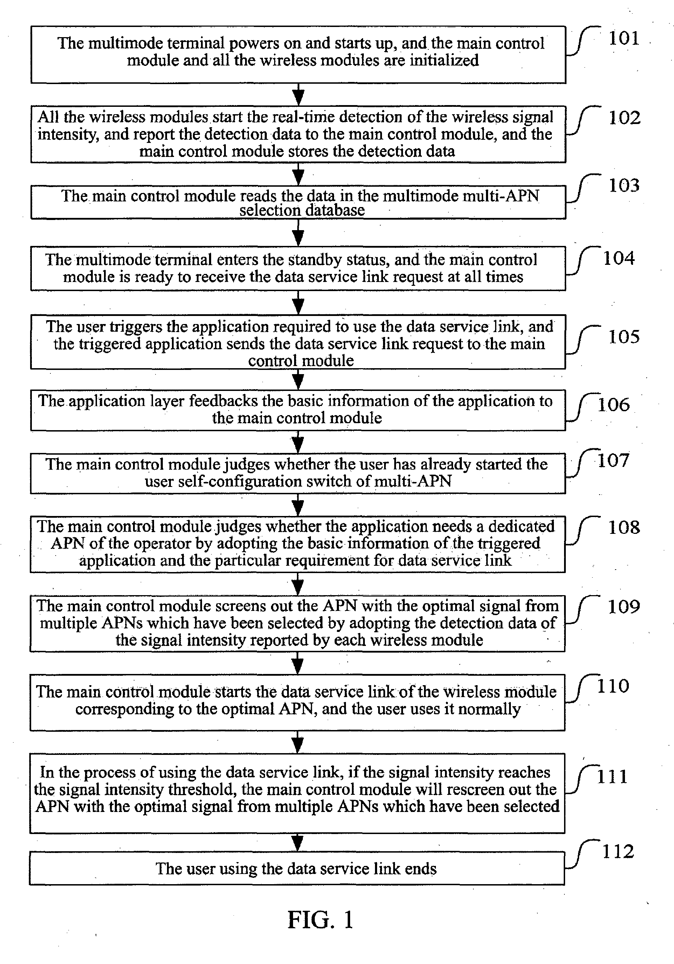

The whole realization procedure of the method for selecting the APN is shown in FIG. 1, including:
in step 101: the multimode terminal powers on and starts up, and the main control module and all the wireless modules are initialized;
in step 102: all the wireless modules start the real-time detection of the wireless signal intensity, and report the detection data to the main control module, and the main control module stores the detection data;
in step 103: the main control module reads the data in the multimode multi-APN selection database;
in step 104: the multimode terminal enters the standby status, and the main control module is ready to receive the data service link request at all times;
in step 105: the user triggers the application required to use data service link, the triggered application sends the data service link request to the main control module, and the main control module judges whether the application has a particular requirement for the data service link according to that request, if yes, it records the particular requirement, and request to the application layer of the terminal to obtain the basic information of the application at the same time, such as, the key word of the application;
the data service link request carrys the specific content and particular requirement, and part of the applications have particular requirement in the data service link, such as, required to use the particular APN, etc.
in step 106: the application layer feedbacks the basic information of the application to the main control module, such as the key word;
in step 107: the main control module judges whether the user already starts the user self-configuration switch of the multi-APN, if already started, then it performs the realization procedure of the user setting selection policy of the multi-APN (step 301∼309); otherwise, it performs the self-adaptation realization procedure of the built-in multi-APN, and performs step 108 at the same time;
in step 108: the main control module judges whether the application needs a dedicated APN of the operator by adopting the basic information of the triggered application (key word) and the particular requirement for data service link, screens in the multimode multi-APN selection database or the database corresponding to the APN customized by the operation, and selects multiple APNs meeting the characteristic of the data service link;
in the corresponding relation table of the application and the APN in the multimode multi-APN selection database, the basic information and particular requirement of the application are recorded.

The main control module judges whether the application needs the dedicated APN of the operator, if it needs, then it screens from the database corresponding to the APN customized by the operator; if it does not need, then it screens from the multimode multi-APN selection database.

In step 109: the main control module screens the APN with the optimal signal from multiple APNs have been selected by adopting the detection data of the signal intensity reported by each wireless module;
in step 110: the main control module starts the data service link of the wireless module corresponding to the optimal APN, and the user uses normally;
in step 111: in the process of using the data service link, if the signal intensity reaches the signal intensity threshold, the main control module will rescreen the APN with the optimal signal from multiple APNs have been selected (step 109);
the signal intensity threshold can be set according to the empiric value.

In step 112: the user using the data service link ends.

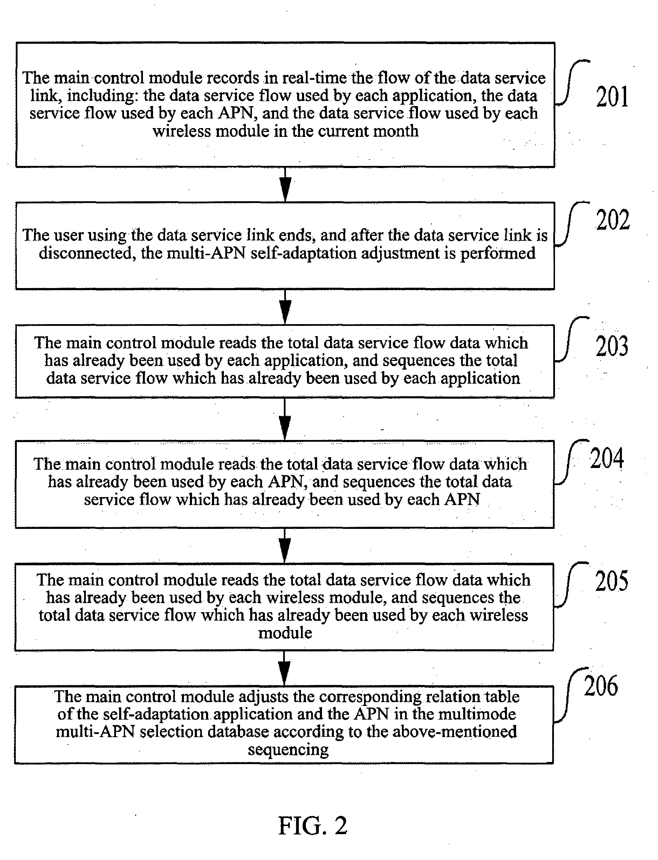

FIG. 2 shows the self-adaption realizing procedure of multi-APN of the present embodiment, including:
in step 201: the main control module records in real-time the flow of the data service link, including: the data service flow used by each application, the data service flow used by each APN, and the data service flow used by each wireless module in that month;
in step 202: the user using the data service link ends, and after the data service link is disconnected, the multi-APN self-adaptation adjustment is performed;
in step 203: the main control module reads the total data service flow data already used by each application, and sequences the total data service flow already used by each application;
in step 204: the main control module reads the total data service flow data already used by each APN, and sequences the total data service flow already used by each APN;
in step 205: the main control module reads the total data service flow data already used by each wireless module, and sequences the total data service flow already used by each wireless module;
in step 206: the main control module adjusts the corresponding relation table of the self-adaptation application and the APN in the multimode multi-APN selection database according to the above-mentioned sequencing, including: adjusting the application whose data service flow has been used is greater than the flow usage threshold, corresponding to the APN corresponding to the wireless module whose surplus data service flow is greater than the flow surplus data threshold; the application whose data service flow has been used is smaller than the flow usage threshold being corresponding to the APN corresponding to the wireless module whose surplus data service flow is smaller than the flow surplus threshold; the APN corresponding to the wireless module whose surplus data service flow is zero having the lowest priority, and the specific sequencing will be calculated according to the charge standard.

The above-mentioned flow usage threshold and the flow surplus threshold value can be set as multiple, and the corresponding relation of the application and the APN is adjusted in grades.

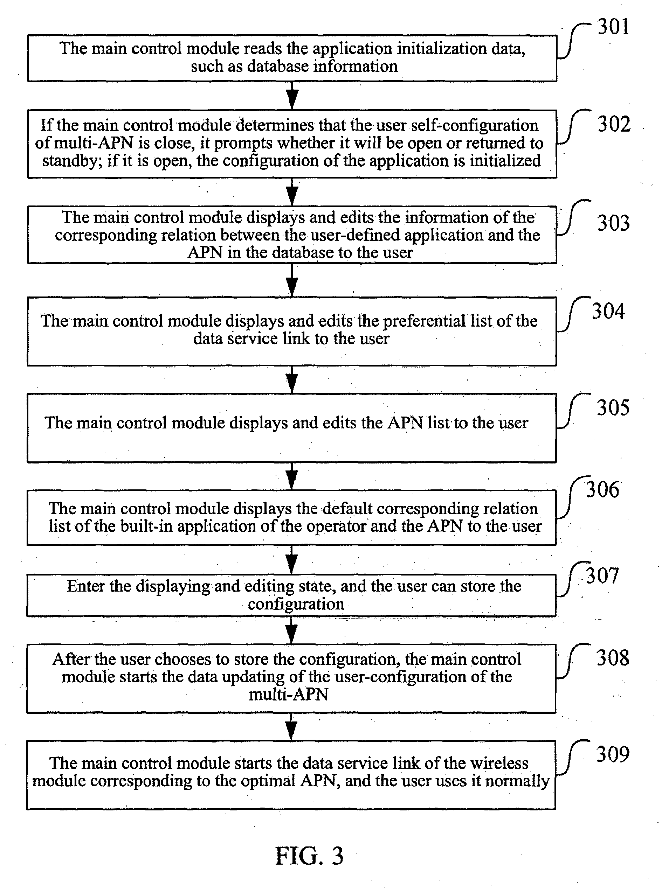

FIG. 3 shows the realization procedure of the user setting multi-APN selection policy, including:
in step 301: the main control module reads the application initialization data, such as, data base information;
in step 302: if the main control module determines that the current state of the user self-configuration of the multi-APN is close, then it suggests whether it will be open or returned to standby; if the current state is open, then it initializes the configuration of the current application according to the application initialization data;
supposing after the multimode terminal powers on and starts up, the user already starts the user-defined configuration application of the multi-APN.

In step 303: the main control module displays editing the information of the corresponding relation between the user-defined application and the APN in the database to the user;
in step 304: if in the information of the corresponding relation between the user-defined application and the APN, the application is corresponding to multiple APNs, then the main control module displays editing the preferential list of the data service link to the user, and that list displays and can edit the ranks of multiple APNs which the user hopes the application be corresponding to, and displays the total flow of the data service already used that month by the wireless module corresponding to the APN at the same time;
in step 305: the main control module displays editing the APN list to the user; in step 306: the main control module displays the default corresponding relation list of the built-in application of the operator and the APN to the user, and that list can be defined as editable and non-editable according to the operator requirement, and regarded as the reference when the user edits the above-mentioned information of the corresponding relation between the user-defined application and the APN;
in step 307: it enters the displaying and editing state, and the user can store the configuration;
in step 308: after the user selects storing the configuration, the main control module starts the data updating of the user-configuration of the multi-APN, and when the data service is started subsequently, the procedure can be started according to the new configuration;
in step 309: the main control module searches the APN corresponding to the triggered application from the information of the corresponding relation between the user-defined application and the APN, if the triggered application is corresponding to multiple APNs, then the APN is selected according to the rank and the data service link of the wireless module corresponding to the selected APN is started, then the user uses normally.

The realization and the design of the multimode multi-APN selection database is as follows:
(1) the key word of the application name: the index of the application name, used for sequencing and searching.
(2) the key word of the APN name: the index of the APN, used for sequencing and searching.
(3) the corresponding relation table of the built-in application and the APN: recording the information of the corresponding relation.
(4) the key word of the APN priority: the index of the APN priority, used for sequencing and searching.
(5) the APN priority list defined by the user: recording what priority there is and other information of priority.
(6) the corresponding relation table of the user-defined application and the APN: recording the information of the corresponding relation.
(7) the recording table of calculating and sequencing the total flow of the data service used by the application: recording the sequenced data.
(8) the recording table of calculating and sequencing the total flow of the data service used by the APN: recording the sequenced data.
(9) the recording table of calculating and sequencing the total flow of the data service used by the wireless module: recording the sequenced data.
(10) the corresponding relation table of the self-adaptation application and the APN: recording the information of the corresponding relation.

In the present embodiment, the police of screening the APN in the multi-APN selection database:
the priority is configured as follows:
   1, taking the corresponding relation between the built-in application of the operator and the APN as the highest priority (defined depending on the operator requirement), and searching in the table of corresponding relation between the built-in application of the operator and the APN;
   2, searching in the corresponding relation table between the user-defined application and the APN;
   3, searching in the APN priority list defined by the user;
   4, searching in the list of corresponding relation between the self-adaptation application and the APN;
   5, according to the wireless signal intensity information of the APN, searching the intensity information of the current network state of the corresponding APN.

More implementation of the priority ranks can be collected and completed constantly in the subsequent user experience.

An embodiment:
the present embodiment is entirely described by taking the customized requirement of a certain operator and the requirement of improvement in the user experience as an example hereinafter. The application according to the requirement of different data service links started by the user is corresponding to different scenarios of each wireless module, and these three kinds of scenarios are as follows respectively:
   the scenario one is: the scenario of which the application customized by each operator carries the corresponding customized APN, and most of the operations of this scenario, according to the operator requirement and the particular built-in application of the operator, do not allow the user to edit and modify the APN corresponding to the customized application, and the corresponding relation with each APN is determined according to the requirement of each application operator.

The scenario two is: the scenario of which the user-customized application of the multi-APN configuration carries the corresponding customized APN. In the operation of this scenario, the user itself can flexibly edit the APN configuration corresponding to part or all of applications according to its own habit, or the sequencing of the total data service flow calculated by the terminal, the sequencing of the total data service flow of each APN, the sequencing of the total data service flow of each wireless module, and the data service expenses standard of the communication set menu bought by itself.

The scenario three is: the scenario that there is no user-customized application of the multi-APN configuration and the best APN is screened and optimized out according to the self-adaptation method. The operation of this scenario has not the user self-defined information, so adopts the default leave-factory data, for example, for the mobile phone customized by the operator, each APN generally has a corresponding wireless module or corresponding application, and each wireless module has a corresponding expenses set menu, and according to these information, the terminal counts up and updates the sequencing of the total data service flow of each application, the sequencing of the total data service flow of each APN and the sequencing of the total data service flow of each wireless in real time at the same time. The terminal counts up and works out the best list of corresponding relation between the optimal self-adaptation application and the APN according to these flow sequencing. The list updates and adjusts the best corresponding relation in real time according to the using condition of the data service.

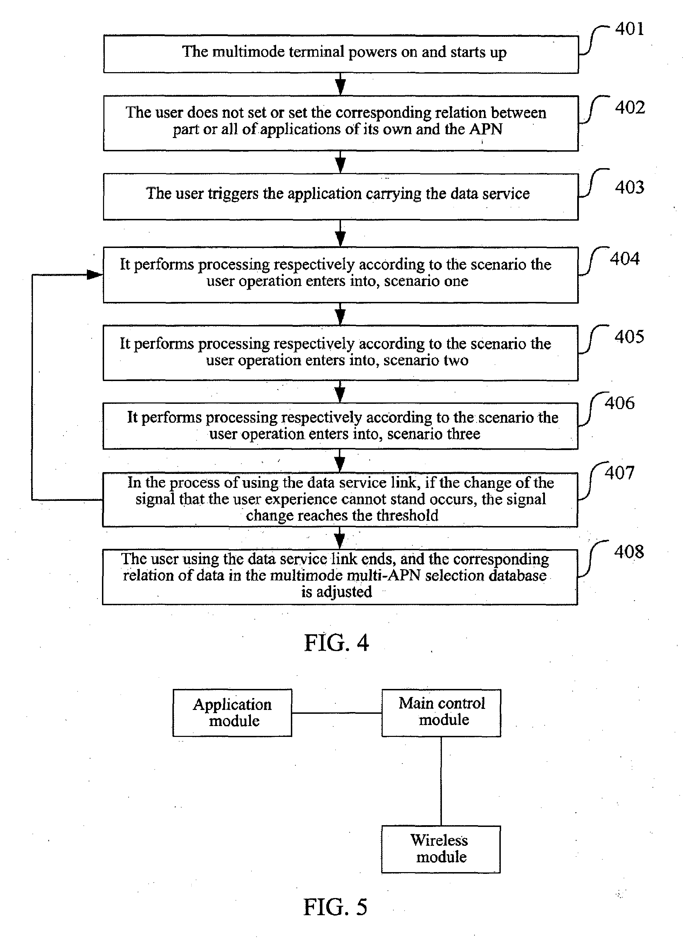

Aiming at the three scenarios above, the steps of specific embodiment are listed hereinafter, as shown in FIG. 4, including:
401: the multimode terminal powers up and starts up;
402: the user does not set or set the corresponding relation between part or all of applications of its own and the APN;
403: the user triggers the application carrying the data service;
404: it performs processing respectively according to the scenario the user operation enters into; in the scenario one: the scenario of which the application customized by each operator carries the corresponding customized APN, in the table of the corresponding relation between the built-in application and the APN, the terminal screens out multiple APNs suitable for that application, and the main control further implements screening on the multiple APNs selected in the preceding step by utilizing the signal intensity information reported by each wireless module, screens out the APN data service link of which the signal is optimal, and starts that data service link to make it be used by the application;
405: it performs processing respectively according to the scenario the user operation enters into; in the scenario two: the scenario of which the application customized by each user carries the corresponding customized APN, in the table of the corresponding relation between the user-defined application and the APN, the terminal screens out multiple APNs suitable for that application, the main control further implements screening on the multiple APNs selected in the preceding step by utilizing the signal intensity information reported by each wireless module, screens out the APN data service link of which the signal is optimal, and starts that data service link to make it be used by the application;
406: it performs processing respectively according to the scenario the user operation enters into; in the scenario one: the scenario that there is no user-customized application and the best APN is screened and optimized according to the self-adaptation method, in the table of the corresponding relation between the self-adaption application and the APN, the terminal screens out multiple APNs suitable for that application, the main control further implements screening on the multiple APNs selected in the preceding step by utilizing the signal intensity information reported by each wireless module, screens out the APN data service link of which the signal is optimal, and starts that data service link to make it be used by the application;
407: in the process of using the data service link, if the change of the signal that the user experience cannot stand occurs, after the signal change reaches the threshold, the main control will restart the screening of steps 404-406;
408: the user using the data service link ends, it sequences the recording table of calculating and sequencing the total flow of the data service used by the application, sequences the recording table of calculating and sequencing the total flow of the data service used by the APN, sequences the recording table of calculating and sequencing the total flow of the data service used by the wireless module, and adjusts the data corresponding relation in the multimode multi-APN selection database, for example, the user uses the dual-mode terminal of the TD and the GMS, the TV application uses 5M flow, the Browser application uses 1M flow, the TD wireless module uses the Flat-rate package charges of 100M, and the GMS uses the Flat-rate package charges of 30M. So the terminal adjusts the TV to use the APN (T-APN) corresponding to the TD wireless module; adjusts the Browser application to use the APN (G-APN) corresponding to the GMS wireless module; and when the Flat-rate package charges of 30M is used completely, it automatically adjusts the Browser application to use the APN (T-APN) corresponding to the TD wireless module.

What is shown in FIG. 5 is a framework diagram of an apparatus for selecting an access point of the present embodiment, including: an application module, a main control module and a wireless module, wherein:
the application module is configured to send a data service link request to the main control module after triggered by a user; and
the main control module is configured to select an APN for the application module from the information of a corresponding relation between the application and the APN in a multi-APN selection database according to basic information of the application module after receiving the data service link request and when the user does not start the user self-configuration of the multi-APN and the application module does not need a dedicated APN; if multiple APNs are selected from the information of the corresponding relation between the application and the APN, then an APN with the optimal signal is screened from multiple APNs have been selected according to the detection data of the wireless signal intensity reported by the wireless module, and the wireless module corresponding to the APN with the optimal signal is started, and the data service link is established for the application.

The wireless module is configured to perform the detection on wireless signal intensity and send detection data to the main control module.

The information of the corresponding relation between the application and the APN in the multi-APN selection database contains: information of the corresponding relation between a self-adaptation application and the APN; and
the main control module is further configured to record the flow of the data service link after establishing the data service link for the application and when the application uses the data service link, and to adjust the corresponding relation between the application and the APN in the information of the corresponding relation between the self-adaptation application and the APN according to the recorded flow of the data service link.

The flow of the data service link includes: the data service flow used by the application, the data service flow used by the APN and the data service flow used by the wireless module; and
the main control module is configured to adjust the corresponding relation between the application and the APN according to the following way: sequencing total data service flow have been used by each application, ANP and wireless module; adjusting the corresponding relation of the application and the APN according to the sequencing to make the application whose data service flow have been used is greater than a flow usage threshold be corresponding to the APN corresponding to the wireless module whose surplus data service flow is greater than a flow surplus threshold; making the application whose data service flow have been used is smaller than the flow usage threshold be corresponding to the APN corresponding to the wireless module whose surplus data service flow is smaller than the flow surplus threshold; making the APN corresponding to the wireless module whose surplus data service flow is zero have the lowest priority.

The information of the corresponding relation between the application and the APN in the multi-APN selection database contains the information of the corresponding relation between a built-in application and the APN, the information of the corresponding relation between the user-defined application and the APN, the priority of the user-defined APN, the information of the corresponding relation between the self-adaptation application and the APN, and the wireless signal intensity information of the APN, whose priorities are from high to low; and
the main control module is further configured to select the APN for the application from the information of the corresponding relation between the application and the APN according to the above-mentioned priority.

Other functions of each module in the present apparatus please refer to the description of the content in the method.

Those skilled in the art can understand that all or part of the steps in the above-mentioned method can be fulfilled by instructing the relevant hardware components by programs, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module in the above-mentioned embodiments can be implemented in the form of hardware, or in the form of software function module. The present invention is not limit to any specific form of the combination of the hardware and software.

### Industrial Applicability

The present invention selects different access points for the application for connecting, to realize managing the selection of multiple APNs in the multimode terminal by using the data service, and to reach and meet the objectives, such as optimally using of the user in the data service application in the Android mobile phone, improving the performance of the data service, reasonably distributing the data service use flow and reducing the data service expenses of the user, thus further improving the user experience, which can meet the customized requirement of the operator, and also can increase the data service performance of the dual-mode terminal and distribute the data service use flow of the dual-mode terminal reasonably.

## Claims

1. A method for selecting an access point name, APN, comprising:
a user triggering an application required to use a data service link; and
when the user does not start user self-configuration of multi-APN and the application does not need a dedicated APN, a terminal selecting an APN for the application from information of a corresponding relation between application and APN in a multi-APN selection database according to a key word of the application, wherein said user self-configuration of multi-APN is that if the application is corresponding to multiple APNs, then a main control module of the terminal is adapted to display editing the preferential list of the data service link to the user, and that list displays and edits the ranks of multiple APNs which the user hopes the application be corresponding to;
further comprising:
after the terminal starts up, a wireless module of that terminal performing detection on wireless signal intensity; and
if multiple APNs have been selected from the information of the corresponding relation between application and APN, then the terminal screening out an APN with an optimal signal from the multiple APNs which have been selected according to detection data of the wireless signal intensity of the wireless module, starting the wireless module corresponding to the APN with the optimal signal, and establishing the data service link for the application;
wherein the information of the corresponding relation between application and APN in the multi-APN selection database containing: information of a corresponding relation between self-adaptation application and APN; and
after establishing the data service link for the application, when the application uses the data service link, the terminal further recording flow of the data service link, and adjusting the corresponding relation between application and APN in the information of the corresponding relation between self-adaptation application and APN according to the flow of the data service link which has been recorded, and
wherein, the flow of the data service link comprises: data service flow used by the application, data service flow used by the APN and data service flow used by the wireless module; and
the step of the terminal adjusting the corresponding relation between application and APN comprises: sequencing total data service flow which has been used by each application, APN and wireless module; adjusting the corresponding relation between application and APN according to the sequencing, causing the application whose data service flow which has been used is greater than a flow usage threshold to correspond to the APN corresponding to the wireless module whose surplus data service flow is greater than a flow surplus threshold; causing the application whose data service flow which has been used is less than the flow usage threshold to correspond to the APN corresponding to the wireless module whose surplus data service flow is less than the flow surplus threshold; causing the APN corresponding to the wireless module whose surplus data service flow is zero to have a lowest priority.

2. The method according to claim 1, further comprising:
before selecting the APN for the application, the terminal further judging whether the application has a particular requirement for the data service link, if yes, then recording that particular requirement, and selecting the APN for the application from the information of the corresponding relation between application and APN in the multi-APN selection database according to the key word and the particular requirement of the application.

3. The method according to claim 1, further comprising:
the information of the corresponding relation between application and APN in the multi-APN selection database further containing: information of a corresponding relation between user-defined application and APN; the terminal displaying and editing the information of the corresponding relation between user-defined application and APN to the user when the user starts the user self-configuration of the multi-APN; and
the terminal searching for the APN corresponding to the triggered application from the information of the corresponding relation between user-defined application and APN, and starting the data service link of the wireless module corresponding to that APN.

4. The method according to claim 3, further comprising:
if one application corresponds to multiple APNs in the information of the corresponding relation between user-defined application and APN, then the terminal displaying and editing a preferential list of data service link to the user, and the list recording ranks of the multiple APNs corresponding to the application; and
when searching for the APN corresponding to the triggered application, if the triggered application corresponds to multiple APNs, then the terminal selecting an APN according to the ranks and starting the data service link of the wireless module corresponding to the APN which has been selected.

5. The method according to claim 1, further comprising:
the information of the corresponding relation between application and APN in the multi-APN selection database containing information of a corresponding relation between built-in application and APN, information of a corresponding relation between user-defined application and APN, a user-defined APN priority, information of a corresponding relation between self-adaptation application and APN and wireless signal intensity information of APN, whose priorities are from high to low; and
the terminal selecting the APN for the application from the information of the corresponding relation between application and APN according to the above-mentioned priority.

6. An apparatus for selecting an access point name, APN, comprising: an application module and a main control module, wherein:
the application module is configured to send a data service link request to the main control module after triggered by a user; and
the main control module is configured to select an APN for the application module from information of a corresponding relation between application and APN in a multi-APN selection database according to a key word of the application module after receiving the data service link request and when the user does not start user self-configuration of multi-APN and the application module does not need a dedicated APN;
further comprising a wireless module, wherein,
the wireless module is configured to perform detection on wireless signal intensity and send detection data to the main control module; and
the main control module is further configured to screen out an APN with an optimal signal from multiple APNs which have been selected according to the detection data of the wireless signal intensity reported by the wireless module if the multiple APNs are selected from the information of the corresponding relation between application and APN, and to start the wireless module corresponding to the APN with the optimal signal, and to establish the data service link for the application;
wherein, the information of the corresponding relation between application and APN in the multi-APN selection database contains: information of a corresponding relation between self-adaptation application and APN; and
the main control module is further configured to record flow of the data service link after the data service link is established for the application and when the application uses the data service link, and to adjust the corresponding relation between application and APN in the information of the corresponding relation between self-adaptation application and APN according to the flow of the data service link which has been recorded;
wherein, the flow of the data service link comprises: data service flow used by the application, data service flow used by the APN and data service flow used by the wireless module; and
the main control module is configured to adjust the corresponding relation between application and APN according to a following way: sequencing total data service flow which has been used by each application, ANP and wireless module; adjusting the corresponding relation between application and APN according to the sequencing, causing the application whose data service flow which has been used is greater than a flow usage threshold to correspond to the APN corresponding to the wireless module whose surplus data service flow is greater than a flow surplus threshold; causing the application whose data service flow which has been used is less than the flow usage threshold to correspond to the APN corresponding to the wireless module whose surplus data service flow is less than the flow surplus threshold; causing the APN corresponding to the wireless module whose surplus data service flow is zero to have a lowest priority.

7. The apparatus according to claim 6, wherein, the information of the corresponding relation between application and APN in the multi-APN selection database contains information of a corresponding relation between built-in application and APN, information of a corresponding relation between user-defined application and APN, a user-defined APN priority, information of a corresponding relation between self-adaptation application and APN and wireless signal intensity information of APN, whose priorities are from high to low; and
the main control module is further configured to select the APN for the application from the information of the corresponding relation between application and APN according to the above-mentioned priority.

## Patentansprüche

1. Verfahren zum Wählen eines Zugangspunktnamens APN, das Folgendes beinhaltet:
Auslösen, durch einen Benutzer, einer zum Benutzen einer Datendiensteverbindung benötigten Anwendung; und
Wählen durch ein Terminal, wenn der Benutzer keine Benutzerselbstkonfiguration von Multi-APN startet und die Anwendung keinen dedizierten APN benötigt, eines APN für die Anwendung anhand von Informationen über eine entsprechende Beziehung zwischen Anwendung und APN in einer Multi-APN-Auswahldatenbank gemäß einem Schlüsselwort der Anwendung, wobei die genannte Benutzerselbstkonfiguration von Multi-APN die ist, dass, wenn die Anwendung mehreren APNs entspricht, ein Hauptsteuermodul des Terminals so ausgelegt ist, dass es dem Benutzer die Bearbeitung der Vorzugsliste der Datendiensteverbindung anzeigt, und diese Liste die Rangfolge von mehreren APNs anzeigt und bearbeitet, von der der Benutzer hofft, dass sie der Anwendung entspricht;
und das ferner Folgendes beinhaltet:
Durchführen, nach dem Starten des Terminals, einer Erkennung der drahtlosen Signalintensität durch das Terminal; und
Herausfiltern durch das Terminal, wenn mehrere APNs anhand der Informationen über die entsprechende Beziehung zwischen Anwendung und APN ausgewählt wurden, eines APN mit einem optimalen Signal aus den mehreren APNs, die gemäß Erkennungsdaten der drahtlosen Signalintensität des drahtlosen Moduls ausgewählt wurden, Starten des drahtlosen Moduls, das dem APN mit dem optimalen Signal entspricht, und Aufbauen der Datendiensteverbindung für die Anwendung;
wobei die Informationen über die entsprechende Beziehung zwischen Anwendung und APN in der Multi-APN-Auswahldatenbank Folgendes beinhalten: Informationen über eine entsprechende Beziehung zwischen Selbstanpassungsanwendung und APN; und
ferner Aufzeichnen durch das Terminal, nach dem Aufbauen der Datendiensteverbindung für die Anwendung, wenn die Anwendung die Datendiensteverbindung benutzt, eines Flusses der Datendiensteverbindung und Justieren der entsprechenden Beziehung zwischen Anwendung und APN in den Informationen über die entsprechende Beziehung zwischen Selbstanpassungsanwendung und APN gemäß dem aufgezeichneten Fluss der Datendiensteverbindung, und
wobei der Fluss der Datendiensteverbindung Folgendes beinhaltet: von der Anwendung benutzten Datendienstefluss, vom APN benutzten Datendienstefluss und vom drahtlosen Modul benutzten Datendienstefluss; und
wobei der Schritt des Justierens, durch das Terminal, der entsprechenden Beziehung zwischen Anwendung und APN Folgendes beinhaltet: Sequenzieren des gesamten Datendiensteflusses, der von jeder Anwendung, dem APN und dem drahtlosen Modul benutzt wurde; Justieren der entsprechenden Beziehung zwischen Anwendung und APN gemäß der Sequenzierung, Bewirken, dass die Anwendung, deren benutzter Datendienstefluss größer ist als eine Flussgebrauchsschwelle, dem APN entspricht, der dem drahtlosen Modul entspricht, dessen überschüssiger Datendienstefluss größer ist als eine Flussüberschussschwelle; Bewirken, dass die Anwendung, deren benutzter Datendienstefluss geringer ist als die Flussgebrauchsschwelle, dem APN entspricht, der dem drahtlosen Modul entspricht, dessen überschüssiger Datendienstefluss geringer ist als die Flussüberschussschwelle; Bewirken, dass der APN, der dem drahtlosen Modul entspricht, dessen überschüssiger Datendienstefluss null ist, die niedrigste Priorität hat.

2. Verfahren nach Anspruch 1, das ferner Folgendes beinhaltet:
ferner Beurteilen durch das Terminal, vor dem Auswählen des APN für die Anwendung, ob die Anwendung eine bestimmte Anforderung an die Datendiensteverbindung hat, wenn ja, Aufzeichnen dieser bestimmten Anforderung und Auswählen des APN für die Anwendung aus den Informationen über die entsprechende Beziehung zwischen der Anwendung und dem APN in der Multi-APN-Auswahldatenbank gemäß dem Schlüsselwort und der jeweiligen Anforderung der Anwendung.

3. Verfahren nach Anspruch 1, das ferner Folgendes beinhaltet:
die Informationen über die entsprechende Beziehung zwischen Anwendung und APN in der Multi-APN-Auswahldatenbank beinhalten ferner Folgendes: Informationen über eine entsprechende Beziehung zwischen der benutzerdefinierten Anwendung und APN; Anzeigen dem Benutzer und Bearbeiten, durch das Terminal, der Informationen über die entsprechende Beziehung zwischen benutzerdefinierter Anwendung und APN, wenn der Benutzer mit der Benutzerselbstkonfiguration des Multi-APN beginnt; und
Suchen, durch das Terminal, nach dem APN, der der ausgelösten Anwendung entspricht, anhand der Informationen über die entsprechende Beziehung zwischen benutzerdefinierter Anwendung und APN, und Starten der Datendiensteverbindung des diesem APN entsprechenden drahtlosen Moduls.

4. Verfahren nach Anspruch 3, das ferner Folgendes beinhaltet:
Anzeigen dem Benutzer und Bearbeiten durch das Terminal, falls eine Anwendung mehreren APNs in den Informationen über die entsprechende Beziehung zwischen benutzerdefinierter Anwendung und APN entspricht, einer Vorzugsliste von Datendiensteverbindungen, und Aufzeichnen, durch die Liste, von Rangfolgen der mehreren APNs entsprechend der Anwendung; und
Auswählen durch das Terminal, bei der Suche nach dem APN, der der ausgelösten Anwendung entspricht, wenn die ausgelöste Anwendung mehreren APNs entspricht, eines APN gemäß den Rangfolgen und Starten der Datendiensteverbindung des drahtlosen Moduls, das dem gewählten APN entspricht.

5. Verfahren nach Anspruch 1, das ferner Folgendes beinhaltet:
die Informationen über die entsprechende Beziehung zwischen Anwendung und APN in der Multi-APN-Auswahldatenbank beinhalten Informationen über eine entsprechende Beziehung zwischen eingebauter Anwendung und APN, Informationen über eine entsprechende Beziehung zwischen benutzerdefinierter Anwendung und APN, eine benutzerdefinierte APN-Priorität, Informationen über eine entsprechende Beziehung zwischen Selbstanpassungsanwendung und APN und drahtlosen Signalintensitätsinformationen über APN, deren Prioritäten von hoch bis niedrig gehen; und
Auswählen, durch das Terminal, des APN für die Anwendung anhand der Informationen über die entsprechende Beziehung zwischen Anwendung und APN gemäß der oben erwähnten Priorität.

6. Vorrichtung zum Auswählen eines Zugangspunktnamens APN, die Folgendes umfasst: ein Anwendungsmodul und ein Hauptsteuermodul, wobei:
das Anwendungsmodul zum Senden einer Datendiensteverbindungsanforderung zum Hauptsteuermodul nach Auslösung durch einen Benutzer konfiguriert ist; und
das Hauptsteuermodul zum Auswählen eines APN für das Anwendungsmodul aus Informationen über eine entsprechende Beziehung zwischen Anwendung und APN in einer Multi-APN-Auswahldatenbank gemäß einem Schlüsselwort des Anwendungsmoduls nach dem Empfangen der Datendiensteverbindungsanforderung konfiguriert ist, und wenn der Benutzer keine Benutzerselbstkonfiguration von Multi-APN startet und das Anwendungsmodul keinen dedizierten APN benötigt;
die ferner ein drahtloses Modul umfasst, wobei
das drahtlose Modul zum Durchführen von Erkennung der drahtlosen Signalintensität und zum Senden von Erkennungsdaten zum Hauptsteuermodul konfiguriert ist; und
das Hauptsteuermodul ferner zum Ausfiltern eines APN mit einem optimalen Signal von mehreren APNs konfiguriert ist, die gemäß den vom drahtlosen Modul gemeldeten Erkennungsdaten der drahtlosen Signalintensität gewählt wurden, wenn die mehreren APNs aus den Informationen über die entsprechende Beziehung zwischen Anwendung und APN ausgewählt werden, und zum Starten des drahtlosen Moduls entsprechend dem APN mit dem optimalen Signal, und zum Aufbauen der Datendiensteverbindung für die Anwendung;
wobei die Informationen über die entsprechende Beziehung zwischen Anwendung und APN in der Multi-APN-Auswahldatenbank Folgendes beinhalten: Informationen über eine entsprechende Beziehung zwischen Selbstanpassungsanwendung und APN; und
das Hauptsteuermodul ferner zum Aufzeichnen von Fluss der Datendiensteverbindung nach dem Aufbauen der Datendiensteverbindung für die Anwendung konfiguriert ist, und wenn die Anwendung die Datendiensteverbindung benutzt, zum Justieren der entsprechenden Beziehung zwischen Anwendung und APN in den Informationen über die entsprechende Beziehung zwischen Selbstanpassungsanwendung und APN gemäß dem aufgezeichneten Fluss der Datendiensteverbindung;
wobei der Fluss der Datendiensteverbindung Folgendes umfasst: von der Anwendung benutzten Datendienstefluss, vom APN benutzten Datendienstefluss und vom drahtlosen Modul benutzten Datendienstefluss; und
das Hauptsteuermodul zum Justieren der entsprechenden Beziehung zwischen Anwendung und APN auf die folgende Weise konfiguriert ist: Sequenzieren des gesamten Datendiensteflusses, der von Anwendung, APN und drahtlosem Modul benutzt wird; Justieren der entsprechenden Beziehung zwischen Anwendung und APN gemäß der Sequenzierung, Bewirken, dass die Anwendung, deren benutzter Datendienstefluss größer ist als eine Flussgebrauchsschwelle, dem APN entspricht, der dem drahtlosen Modul entspricht, dessen überschüssiger Datendienstefluss größer ist als eine Flussüberschussschwelle; Bewirken, dass die Anwendung, deren benutzter Datendienstefluss geringer ist als eine Flussgebrauchsschwelle, dem APN entspricht, der dem drahtlosen Modul entspricht, dessen überschüssiger Datendienstefluss geringer ist als die Flussüberschussschwelle; Bewirken, dass der APN, der dem drahtlosen Modul entspricht, dessen überschüssiger Datendienstefluss null ist, eine niedrigste Priorität hat.

7. Vorrichtung nach Anspruch 6, wobei die Informationen über die entsprechende Beziehung zwischen Anwendung und APN in der Multi-APN-Auswahldatenbank Informationen über eine entsprechende Beziehung zwischen eingebauter Anwendung und APN, Informationen über eine entsprechende Beziehung zwischen benutzerdefinierter Anwendung und APN, eine benutzerdefinierte APN-Priorität, Informationen über eine entsprechende Beziehung zwischen Selbstanpassungsanwendung und APN und drahtlose Signalintensitätsinformationen von APN enthält, deren Prioritäten von hoch bis niedrig gehen; und
das Hauptsteuermodul ferner zum Auswählen des APN für die Anwendung aus den Informationen über die entsprechende Beziehung zwischen Anwendung und APN gemäß der oben erwähnten Priorität konfiguriert ist.

## Revendications

1. Un procédé permettant de sélectionner un nom de point d'accès, APN, qui comprend les étapes suivantes :
un utilisateur invoque une application requise pour utiliser une liaison de service de données ; et
lorsque l'utilisateur ne lance pas une configuration utilisateur automatique de multiples APN et dans le cas où l'application n'a pas besoin d'un APN dédié, un terminal sélectionne un APN pour l'application parmi les informations d'une correspondance entre une application et un APN dans une base de données de sélection de multiples APN selon un mot clé de l'application, dans lequel ladite configuration utilisateur automatique de multiples APN entend que si l'application correspond à de multiples APN, un module de commande principal du terminal est alors adapté pour afficher devant l'utilisateur l'édition de la liste préférentielle de la liaison de service de données et cette liste affiche et édite les classes de multiples APN auxquels l'utilisateur espère que l'application correspondra ;
comprenant en outre :
après que le terminal s'est mis en route, un module sans fil de ce terminal exécute une détection sur l'intensité du signal sans fil ; et
si de multiples APN ont été sélectionnés parmi des informations de la correspondance entre une application et un APN, le terminal dépiste alors un APN avec un signal optimal parmi de multiples APN qui ont été sélectionnés conformément à des données de détection de l'intensité du signal sans fil du module sans fil, met en route le module sans fil correspondant à l'APN avec le signal optimal et établit la liaison de service de données pour l'application ;
dans lequel les informations de la correspondance entre une application et un APN dans la base de données de sélection de multiples APN contiennent : des informations d'une correspondance entre une application d'auto-adaptation et un APN ; et
après l'établissement de la liaison de service de données, lorsque l'application utilise la liaison de service de données, le terminal enregistre en outre le flux de la liaison de service de données et ajuste la correspondance entre une application et un APN dans les informations de la correspondance entre une application d'auto-adaptation et un APN en fonction du flux de la liaison de service de données qui a été enregistré, et
dans lequel le flux de la liaison de service de données comprend : le flux du service de données utilisé par l'application, le flux du service de données utilisé par l'APN et le flux du service de données utilisé par le module sans fil ; et
l'étape du terminal ajuste la correspondance entre une application et un APN ; met en séquences le flux total du service de données qui a été utilisé par chaque application, l'APN et le module sans fil ; ajuste la correspondance entre une application et un APN en fonction de la mise en séquences, cause l'application dont le flux de service de données qui a été utilisé est supérieur à un seuil d'utilisation de flux de correspondre à l'APN correspondant au module sans fil dont le flux du service de données en surplus est supérieur à un seuil de surplus de flux ; cause l'application dont le flux de service de données qui a été utilisé est inférieur au seuil d'utilisation de flux de correspondre à l'APN correspondant au module sans fil dont le flux de service de données en surplus est inférieur au seuil de surplus de flux ; cause l'APN correspondant au module sans fil dont le flux de service de données en surplus est égal zéro d'avoir la priorité la plus basse.

2. Procédé selon la revendication 1, comprenant en outre :
avant la sélection de l'APN pour l'application, le terminal juge en outre si l'application a une exigence spéciale pour la liaison de service de données, si c'est la cas, il enregistre cette exigence spéciale et sélecte l'APN pour l'application parmi les informations de la correspondance entre l'application et l'APN dans la base de données de sélection de multiples APN selon le mot-clé et l'exigence particulière de l'application.

3. Procédé selon la revendication 1, comprenant en outre :
les informations de la correspondance entre l'application et l'APN dans la base de données de sélection de multiples APN contiennent en outre : des informations d'une correspondance entre une application définie par l'utilisateur et un APN ; le terminal affiche devant l'utilisateur et édite les informations de la correspondance entre l'application définie par l'utilisateur et l'APN lorsque l'utilisateur lance la configuration utilisateur automatique de multiples APN ; et
le terminal recherche l'APN correspondant à l'application évoquée parmi des informations de la correspondance entre une application définie par l'utilisateur et un APN et il met en place la liaison de service de données du module sans fil correspondant à cet APN.

4. Procédé selon la revendication 3, comprenant en outre :
si une application correspond à de multiples APN dans les informations de la correspondance entre une application définie par l'utilisateur et un APN, le terminal affiche alors devant l'utilisateur et édite une liste préférentielle de la liaison de service de données et la liste enregistre les classes des multiples APN correspondant à l'application ; et
lors de la recherche de l'APN correspondant à l'application évoquée, si l'application évoquée correspond à de multiples APN, le terminal sélectionne alors un APN selon les classes et lance la liaison de service de données du module sans fil correspondant à l'APN qui a été sélectionné.

5. Procédé selon la revendication 1, comprenant en outre :
les informations de la correspondance entre une application et un APN dans la base de données de sélection de multiples APN contiennent des informations d'une correspondance entre une application incorporée et un APN, des informations d'une correspondance entre une application définie par l'utilisateur et un APN, une priorité de l'APN définie par l'utilisateur, des informations d'une correspondance entre une application d'auto-adaptation et un APN et des informations sur l'intensité du signal sans fil de l'APN, dont les priorités sont d'élevées à basses ; et
le terminal sélecte l'APN pour l'application parmi des informations de la correspondance entre l'application et l'APN selon la priorité susmentionnée.

6. Appareil de sélection d'un nom de point d'accès, APN, comprenant : un module d'application et un module de commande principal, dans lequel :
le module d'application est configuré pour envoyer une demande de liaison de service de données au module de commande principal après avoir été évoqué par un utilisateur ; et
le module de commande principal est configuré pour sélectionner un APN pour le module d'application parmi des informations d'une correspondance entre une application et un APN dans une base de données de sélection de multiples APN selon un mot clé du module d'application après avoir reçu la demande de liaison de service de données et lorsque l'utilisateur ne lance pas de configuration utilisateur automatique de multiples APN et le module d'application n'a pas besoin d'un APN dédié ;
comprenant en outre un module sans fil, dans lequel,
le module sans fil est configuré pour exécuter une détection sur l'intensité de signal sans fil et pour envoyer des données de détection au module de commande sans fil ; et
le module de commande sans fil est en outre configuré pour dépister un APN avec un signal optimal parmi de multiples APN qui ont été sélectionnés en fonction des données de détection de l'intensité du signal sans fil notifiées par le module sans fil si les multiples APN sont sélectionnés parmi les informations de la correspondance entre une application et un APN et pour démarrer le module sans fil correspondant à l'APN avec le signal optimal et pour établir la liaison de service de données pour l'application ;
dans lequel les informations de la correspondance entre une application et un APN dans la base de données de sélection de multiples APN contiennent : des informations d'une correspondance entre une application d'auto-adaptation et un APN ; et
le module de commande principal est en outre configuré pour enregistrer le flux de la liaison de service de données après que la liaison de service de données est établie pour l'application et lorsque l'application utilise la liaison de service de données, et pour ajuster la correspondance entre une application et un APN dans les informations de la correspondance entre une application d'auto-adaptation et un APN en fonction du flux de la liaison de service de données qui a été enregistré ;
dans lequel le flux de la liaison de service de données comprend : le flux du service de données utilisé par l'application, le flux du service de données utilisé par l'APN et le flux du service de données utilisé par le module sans fil ; et
le module de commande principal est configuré pour ajuster la correspondance entre une application et un APN de la façon suivante : il met en séquences le flux total de service de données qui a été utilisé par chaque application, l'APN et le module sans fil : il ajuste la correspondance entre une application et un APN en fonction de la mise en séquences, cause l'application dont le flux de service de données qui a été utilisé est supérieur à un seuil d'utilisation de flux de correspondre à l'APN correspondant au module sans fil dont le flux de service de données en surplus est supérieur à un seuil de surplus de flux ; cause l'application dont le flux de service de données qui a été utilisé est inférieur au seuil d'utilisation de flux de correspondre à l'APN correspondant au module sans fil dont le flux de service de données en surplus est inférieur au seuil de surplus de flux ; cause l'APN correspondant au module sans fil dont le flux de service de données en surplus est égal à zéro d'avoir la priorité la plus basse.

7. Appareil selon la revendication 6, dans lequel les informations de la correspondance entre une application et un APN dans la base de données de sélection de multiples APN contient des informations d'une correspondance entre une application incorporée et un APN, des informations d'une correspondance entre une application définie par l'utilisateur et un APN, une priorité de l'APN définie par l'utilisateur, des information d'une correspondance entre une application d'auto-adaptation et un APN et des informations sur l'intensité du signal sans fil de l'APN, dont les priorités sont de hautes à basses ; et
le module de commande principal est en outre configuré pour sélectionner l'APN pour l'application parmi des informations de la correspondance entre une application et un APN selon la priorité susmentionnée.
